# EUROPÄISCHE PATENTSCHRIFT

(11) **EP 0 740 591 B1**
(45) Veröffentlichungstag und Bekanntmachung des Hinweises auf die Patenterteilung: **17.03.1999**
(21) Anmeldenummer: 95905091.5
(22) Anmeldetag: 20.12.1994
(51) Int. Cl.: B23K 35/30, C23C 4/12, C23C 4/06, B23K 35/02

(54) **ZWEI- ODER MEHRPHASIGE BESCHICHTUNG**
TWO OR MULTI-PHASE COATING
REVETEMENT BIPHASE OU POLYPHASE

(30) Priorität: 14.01.1994 DE 4400891; 31.03.1994 DE 4411296
(43) Veröffentlichungstag der Anmeldung: 06.11.1996
(73) Patentinhaber: CASTOLIN S.A., CH-1025 Lausanne - St. Sulpice (CH)
(72) Erfinder: DVORAK, Michael, CH-1022 Chavannes (CH); SEIFAHRT, Horst, CH-1092 Belmont (CH)
(74) Vertreter: Hiebsch, Gerhard F., Dipl.-Ing.
(86) Internationale Anmeldenummer: EP9404239
(87) Internationale Veröffentlichungsnummer: WO9519240

(56) Entgegenhaltungen:
- EP-A- 0 073 896
- EP-A- 0 089 943
- EP-A- 0 300 362
- EP-A- 0 456 847
- EP-A- 0 507 229
- WO-A-93/24673
- FR-A- 903 799
- US-A- 4 678 523
- CHEMICAL ABSTRACTS, vol. 104, no. 24, 16.Juni 1986 Columbus, Ohio, US; abstract no. 211030, & JP,A,60 191 693 (NIPPON STEEL CORP) 30.September 1985
- METAL SCIENCE AND HEAT TREATMENT, Bd. 26,Nr. 9/10, September 1984 NEW YORK US, Seiten 742-745, V.A. KRASAVCHIKOV ET AL 'Influence of nickel and nitrogen on the structure, production properties, and mechanical properties of high-chromium faced metal.'

## Beschreibung

Die Erfindung betrifft ein Verfahren zum Herstellen einer zwei- oder mehrphasigen Beschichtung guter Korrosionsbeständigkeit und hoher Festigkeit zur Verbindung mit einem Grundwerkstoff.

Austenitisch-ferritische Stähle mit einem Stickstoffgehalt bis etwa 2,0 Gew. % werden bekanntlich durch Druckaufsticken der Schmelze hergestellt. Erst in letzter Zeit gelang es durch die Verbesserung der Verfahrenstechnik, solche Stähle bewußt einzusetzen.

Durch die guten technologischen Eigenschaften dieser Stähle entstand ein großes Interesse, mit diesen austenitisch-ferritischen Stählen Beschichtungen auf unterschiedlichen Grundwerkstoffen zu erzeugen.

Eine Oberflächenbeschichtung hoher Härte, Festigkeit und Korrosionsbeständigkeit auf einem Substrat ist der WO-A-93/24673 zu entnehmen. Zum Herstellen einer Oberflächenschicht wird Metallpulver verdüst. Der Stickstoffgehalt liegt dabei zwischen 0,005 und 0,05 Gew.-%.

Nach der EP-A 0 037 896 wird ein ferritisch-austenitischer Schweißzusatzwerkstoff, der u.a. auch zum Auftragsschweißen, Plattieren od.dgl. verwendet werden kann, in Form eines Massivdrahtes und eines ummantelten Massivdrahtes als Schweißelektrode zum Zusammenschweißen von Werkstücken beschrieben. Der Kohlenstoffgehalt beträgt zwischen 0,01 bis 0,1 Gew.-%.

Zweiphasige Beschichtungen sind auch aus dem Artikel "Metal Science and Heat Treatment", 26 (1984), bekannt.

Die vorstehend erörterten Vorveröffentlichungen befassen sich mit Massivdrähten oder geschmolzenen und verdüsten Legierungspulvern als Schweißzusatzwerkstoffen; in allen Fällen kann keine Korrektur des beim Schweißen entstehenden Abbrandes durchgeführt werden.

Bei diesem Stand der Technik hat es sich gezeigt, daß das definierte Einbringen des Stickstoffes mit Schwierigkeiten verbunden ist, die sich nur durch aufwendige Verfahren überwinden lassen.

In Kenntnis dieser Gegebenheiten hat sich der Erfinder das Ziel gesetzt, ein einfaches treffsicheres Verfahren zu schaffen, das die definierte Einbringung von Stickstoff gewährleistet.

Zur Losung dieser Aufgabe führt die Lehre des unabhängigen Patentanspruches; die Unteransprüche geben vorteilhafte Weiterbildungen an.

Erfindungsgemäß wird durch ein thermisches Spritzverfahren oder durch Auftragsschweißen agglomerierten Metallpulvers oder eine, Fülldrahtes, das/der aus folgenden Komponenten in Gewichtsprozent - - bezogen auf die Gesamtanalyse - - besteht, die zwei- oder mehrphasige Beschichtung guter Korrosionsbeständigkeit und hoher Festigkeit erzeugt:

| | | |
|---|---|---|
| 8,0 | bis | 35,O % Cr; |
| 0,5 | bis | 20,0 % Ni; |
| 0,005 | bis | 1,5 % C; |
| 0,05 | bis | 3,0 % N; |
| 0,5 | bis | 10,0 % Mo; |
| | | < 6,0 % Mn; |
| | | < 6,0 % Co; |
| | | < 6,0 % Al; |
| | | < 4,9 % Ti; |
| | | < 3,0 % Cu; |
| | | < 3,0 % Nb; |
| | | < 3,0 % Ta; |
| | | < 3,0 % C; |
| | | < 3,0 % Zr; |
| | | < 2,0 % Si, |
| | | < 1,0 % W; |
| | | Rest Fe; |

wobei dem Werkstoffgemisch Stickstoff über eine metallische Verbindung des Stickstoffes zugegeben wird. Bevorzugte Bereiche der Werkstoffkomponenten sind zudem

| |
|---|
| 14,0 bis 30,0 % Cr; |
| 3,0 bis 15,0 % Ni; |
| 0,01 bis 0,1 % C; |
| 0,05 bis 2,8 % N; |
| 1,0 bis 9,0 % Mo |

mit Zusätzen von Mn, Co, Al, Ti, Cu, Nb, Ta, V, Zr, Si und W zusammen bis höchstens 12 Gew.-% (Rest: Fe) oder

| |
|---|
| 19,0 bis 28,0 % Cr; |
| 3,0 bis 15,0 % Ni, |
| 0,02 bis 0,06 % C; |
| 0,1 bis 2,0 % N; |
| 2,0 bis 8,0 % Mo |

mit Zusätzen von Mn, Co, Al, Ti, Cu, Nb, Ta, V, Zr, Si und W zusammen bis höchstens 9,0 Gew.-% (Rest Fe).

So liegt die Lösung der Aufgabe darin, den Stickstoff über die metallische Verbindung des Stickstoffs, z. B. in Form von Nitriden oder pulverförmigen stickstoffhaltigen Legierungen, dem Pulver des Schweißzusatzwerkstoffs zuzugeben, das anschließend durch thermisches Spritzen oder Auftragsschweißen mittels eines Fülldrahts auf den Grundwerkstoff aufgebracht wird.

Ein für das erfindungsgemäße Verfahren eingesetztes Werkstoffgemisch - - bzw. ein Fülldraht oder ein agglomeriertes Pulver -- besteht bevorzugt aus verschiedenen Vorlegierungen, die je nach Auswahl eine metallische und/oder intermetallische Verbindung mit einer definierten Menge an Stickstoff enthalten.

Die in der fertigen Beschichtung notwendige Stickstoffmenge läßt sich durch die Menge der zugesetzten Stickstoffverbindungen und die ausgewählten Schweiß- bzw. Spritzparameter relativ leicht und in engen Grenzen einstellen.

So ist es möglich, die Zugabe des Stickstoffes zu dem Werkstoffgemisch durch Zusatz von Nitriden der Elemente Cr, Ti, Al, Si und Fe oder aber durch Zusatz von Nitriden der Elemente Cr, Al, Mo, V, Ti, Ta, Nb, Si, Zr und Fe durchzuführen. Auch kann man den Stickstoff durch Zusatz von stickstoffhaltigen Legierungen aus zwei oder mehreren Elementen bzw. über in Stickstoffatmosphäre behandelte Teilprodukte bzw. Legierungen oder Legierungselemente einbringen.

Nach einem weiteren Merkmal der Erfindung wird als Beschichtung ein zwei- oder mehrphasiges ferritisch-austenitisches Gefüge mit einem Ferritgehalt zwischen 20 bis 80 Vol.-% - - bevorzugt 20 bis 60 Vol. -%, insbesondere 30 bis 50 Vol.-% --, erzeugt.

Für das Auftragen bevorzugt man ein thermisches Spritzverfahren. Hierzu kann man sich erfindungsgemäß einer Lichtbogen-Drahtspritzpistole, einer autogenen Drahtflammspritzpistole oder eines Hochenergie- bzw. Hochgeschwindigkeitsflammspritzverfahrens bedienen.

Bei einer weiteren Ausführungsform wird der Fülldraht mittels eines Lichtbogenauftragsschweißverfahrens zur Beschichtung verarbeitet. Es können das TIG- oder MIG-Schweißverfahren oder das MAG-Schweißverfahren eingesetzt werden. Ebenso ist es möglich, mit dem Fülldraht Elektroden für die Elektroden-Handschweißung herzustellen.

Mit dem erfindungsgemäßen Verfahren kann die zwei- oder mehrphasige Beschichtung mit einem agglomerierten Metallpulver aufgebaut werden oder durch Agglomerieren von zwei oder mehreren Vorlegierungen. Das agglomerierte Metallpulver kann aus einem ferritischen, einem austenitischen Pulver bzw. einem Nitridpulver bestehen.

Erfindungsgemäß sollen zum Herstellen des Metallpulvers die zwei -- oder die mehreren -- Komponenten durch ein Sprühtrocknungsverfahren unter Einsatz eines Harzbinders agglomeriert werden.

Von Bedeutung ist jedoch auch, das zwei- oder mehrphasige Legierungspulver ohne voraufgehende Wärmebehandlung oder Sinterung dem Beschichtungsvorgang zuzuleiten, obwohl es auch denkbar ist, jenes zwei- bzw. mehrphasige agglomerierte Legierungspulver vor dem Aufbringen wärmezubehandeln, dies bevorzugt unter einer Stickstoffatmosphäre.

Das Aufbringen der Beschichtung aus dem zwei- oder mehrphasigen agglomerierten Metallpulver soll bevorzugt mittels des thermischen Spritzverfahrens geschehen, beispielsweise durch ein autogenes Flammspritzverfahren, mittels einer Hochgeschwindigkeitsflammspritzpistole oder aber unter Einsatz des an sich bekannten Plasmaflammspritzverfahrens.

Statt dessen kann auch ein Plasmapulver-Auftragsschweißverfahren zum Beschichten herangezogen werden.

Als günstig hat es sich erwiesen, die zwei- oder mehrphasige Beschichtung in einer definierten Atmosphäre mit Wärme zu behandeln, insbesondere unter Stickstoff.

Der große Vorteil bei dem Einsatz eines Fülldrahtes oder eines Agglomerates besteht darin, daß relativ einfach und mit sehr wenig Begrenzung und Schwierigkeiten der Stickstoff durch Zugabe eines hohen Nitridanteils in die Füllung oder das Agglomerat zu einer gegebenenfalls notwendigen Korrektur gebracht werden kann.

Weitere Vorteile, Merkmale und Einzelheiten der Erfindung ergeben sich aus den nachstehenden, als vorteilhaft angesehenen Ausführungsbeispielen.

### Beispiel 1

An den Kanten und Flächen von Turbinenschaufeln einer Niederdruckturbine traten nach einer Laufzeit von vier Jahren sehr starke Erosionsangriffe auf.

Diese Probleme konnten bei internen Versuchen durch eine Beschichtung mit dem Werkstoffgemisch bzw. agglomerierten Metallpulver beseitigt und gleichzeitig die Standzeiten erhöht werden.

Als Werkstoffgemisch für die Beschichtung der Kanten und Flächen an den Turbinenschaufeln wurde eine Zusammensetzung ausgewählt mit:

| |
|---|
| 28,0 % Cr |
| 3,0 % Ni |
| 0,05 % C |
| 1,8 % N |
| 1,0 % Mo |
| 3,0 % Ti |
| 0,5 % Si |
| 0,2 % Cu |
| Rest Fe. |

Das Aufschweißen der Kanten nach dem Plasmapulver-Auftragsschweißverfahren wurde mit dem agglomerierten Metallpulver --mit einer an dieses Verfahren angepaßten Korngröße zwischen 37 bis 150 µm -- durchgeführt.

Vor der Beschichtung der Oberflächen wurden die Kanten mechanisch bearbeitet.

Nach dieser Bearbeitung wurde die Oberfläche der Turbinenschaufeln durch Strahlen mit Korund einer Korngröße von 0,2 bis 0,5 mm zum Beschichten vorbereitet.

Die Beschichtung wurde mit dem agglomerierten Metallpulver --mit der gleichen Zusammensetzung, jedoch mit einer anderen Korngröße von 10 bis 45 µm -- mit einer Hochgeschwindigkeitsflammspritzpistole hergestellt.

Anschließend wurden die Oberflächen durch Schleifen bearbeitet. Die fertige Schichtstärke betrug 0,5 mm.

Nach einem Zeitraum von einem Jahr konnten noch nicht einmal Anfänge eines Erosionsangriffes festgestellt werden.

### Beispiel 2

Behälter der chemischen Industrie sollten wegen der Änderung des Fabrikationsprogramms in ihrer Beständigkeit gegen Korrosion angepaßt -- aus Kostengründen bereits verwendete Behälter durch eine Beschichtung den neuen Bedingungen angepaßt -- werden.

Als Werkstoff wurde ein Werkstoffgemisch bzw. ein Fülldraht der folgenden Zusammensetzung eingesetzt:

| |
|---|
| 30,0 % Cr |
| 1,0 % Ni |
| 0,01 % C |
| 1,0 % N |
| 0,5 % Mo |
| 0,8 % Co |
| 2,0 % Al |
| 1,2 % Ti |
| 0,5 % Nb |
| Rest Fe. |

Die zu schützenden Oberflächen der Behälter wurden ebenfalls durch Strahlen mit Korund mit einer Korngröße von 0,2 bis 0,5 mm vorbereitet.

Anschließend erfolgt die Beschichtung mit dem Fülldraht durch Anfspritzen mit einer Zweidraht-Lichtbogen-Spritzpistole.

Die fertig aufgespritzte Schicht mit einer Schichtdicke von 0,6 mm hatte eine Oberflächenrauhigkeit von 10 bis 30 µm Ra.

Die so behandelten Behälter wurden ohne Nachbearbeitung eingesetzt.

Bei der Kontrolle nach einer Laufzeit von sechs Monaten konnte an der Beschichtungsoberfläche keine beginnende Korrosion festgestellt werden.

### Beispiel 3

Beim Bau von Chemieanlagen aus Duplexstählen sollten Schweißungen mit derselben Werkstoffqualität durchgeführt werden.

Als Werkstoffgemisch zum Fügen wurde ein Fülldraht mit der Zusammensetzung vorgeschlagen, welche die zu schweißenden Teile hatten, nämlich

| |
|---|
| 16,0 % Cr |
| 14,0 % Ni |
| 0,01 % C |
| 1,2 % N |
| 6,0 % Mo |
| 3,4 % Mn |
| 3,0 % Ti |
| 1,0 % Ta |
| 1,3 % Cu |
| Rest Fe. |

Zum Zusammenfügen der einzelnen Bauteile wurden der erfindungsgemäße Fülldraht und ein TIG-Schweißverfahren eingesetzt.

Nach dem Zusammenbau der Teile wurden diese durch eine Röntgendurchstrahlung auf Porenfreiheit geprüft und einwandfrei befunden.

Nach einer Laufzeit von etwa einem Jahr konnten an den Übergangszonen keine beginnende Korrosion festgestellt werden.

### Beispiel 4

Die Bauteile einer Rauchgas-Entschwefelungsanlage sollten durch eine korrosions- und erosionsbeständige Beschichtung gegen anfallende Heißgaskorrosion geschützt werden.

Als Werkstoff für diese Beschichtung wurde ein Werkstoffgemisch aus einem agglomerierten Metallpulver eingesetzt mit der Zusammensetzung

| |
|---|
| 30,0 % Cr |
| 3,1 % Ni |
| 0,1 % C |
| 0,8 % N |
| 0,5 % Mn |
| 2,0 % Mo |
| 4,5 % Al |
| 2,0 % Ti |
| 1,0 % V |
| 0,2 % Zr |
| Rest Fe. |

Das Beschichten der Rohre und Flächen erfolgte durch Plasmaspritzen der durch Strahlen vorbereiteten Oberfläche. Die Schichtstärke der einsatzbereiten gespritzen Schicht betrug 0,8 mm.

Bei einer Zwischenkontrolle nach einem ersten Einsatz konnten keine Angriffe festgestellt werden.

## Patentansprüche

1. Verfahren zum Herstellen einer zwei- oder mehrphasigen Beschichtung guter Korrosionsbeständigkeit und hoher Festigkeit auf einem Grundwerkstoff durch thermisches Spritzen oder durch Auftragsschweißen eines Gemisches in Form eines agglomerierten Metallpulvers oder eines Fülldrahtes, wobei: das Gemisch aus folgenden Komponenten in Gewichtprozent bezogen auf die Gesamtanalyse besteht:
| | | |
|---|---|---|
| 8,0 | bis | 35,0 % Cr; |
| 0,5 | bis | 20,0 % Ni; |
| 0,005 | bis | 1,5 % C; |
| 0,05 | bis | 3,0 % N; |
| 0,5 | bis | 10,0 % Mo; |
| | | < 6,0 % Mn; |
| | | < 6,0 % Co; |
| | | < 6,0 % Al; |
| | | < 4,0 % Ti; |
| | | < 3,0 % Cu; |
| | | < 3,0 % Nb; |
| | | < 3,0 % Ta; |
| | | < 3,0 % V; |
| | | < 3,0 % Zr; |
| | | < 2,0 % Si; |
| | | < 1,0 % W; |
| | | Rest Fe, |
wobei dem Werkstoffgemisch Stickstoff über eine metallische Verbindung des Stickstoffes zugegeben wird.

2. Verfahren nach Anspruch 1, dadurch gekennzeichnet, daß die Zugabe des Stickstoffes zu dem Werkstoffgemisch durch Zusatz von Nitriden der Elemente Cr, Ti, Al, Si und Fe erfolgt, oder daß die Zugabe des Stickstoffes zu dem Werkstoffgemisch durch Zusatz von Nitriden der Elemente Cr, Al, Mo, V, Ti, Ta, Nb, Si, Zr und Fe durchgeführt wird.

3. Verfahren nach Anspruch 1, dadurch gekennzeichnet, daß die Zugabe des Stickstoffes zu dem Werkstoffgemisch durch Zusatz von stickstoffhaltigen Legierungen aus zwei oder mehreren Elementen durchgeführt wird, oder daß der Stickstoff über in Stickstoffatmosphäre behandelte Teilprodukte bzw. Legierungen oder Legierungselemente eingebracht wird.

4. Verfahren nach Anspruch 1, dadurch gekennzeichnet, daß die Herstellung der Beschichtung durch Agglomerieren von zwei oder mehr Vorlegierungen durchgeführt wird.

5. Verfahren nach Anspruch 1 oder 4, gekennzeichnet durch ein agglomeriertes Metallpulver aus einem ferritischenaustenitischen Pulver und einem Nitridpulver.

6. Verfahren nach einem der Ansprüche 1 bis 5, dadurch gekennzeichnet, daß zum Herstellen des Metallpulvers die zwei oder mehreren Komponenten durch ein Sprühtrocknungsverfahren unter Einsatz eines Harzbinders agglomiert werden und/oder, daß das zwei- bzw. mehrphasige Legierungspulver wärmebehandlungsfrei bzw. sinterfrei dem Verfahren zugeführt wird.

7. Verfahren nach einem der Ansprüche 1 bis 6, dadurch gekennzeichnet, daß das zwei- bzw. mehrphasige agglomerierte Legierungspulver vor dem Aufbringen wärmebehandelt wird, wobei gegebenenfalls das zwei- oder mehrphasige agglomerierte Legierungspulver vor dem Aufbringen unter einer Stickstoffatmosphäre wärmebehandelt wird.

8. Verfahren nach einem der Ansprüche 1 bis 3, dadurch gekennzeichnet, daß der Fülldraht durch eine Pulverfüllung mit den Legierungselementen und den Stickstoffverbindungen legiert wird, wobei gegebenenfalls die Füllung des Fülldrahtes aus mehreren stickstofffreien Vorlegierungen oder aus mehreren Vorlegierungen mit Stickstoff hergestellt wird.

9. Verfahren nach Anspruch 8, dadurch gekennzeichnet, daß der Fülldraht für Fügearbeiten mit einem Lichtbogenschweißverfahren aufgeschmolzen wird, oder daß der Fülldraht mittels eines Lichtbogenauftragsschweißverfahrens aufgebracht wird, wobei gegebenenfalls der Fülldraht in Form von Elektroden mittels Elektroden-Handschweißung aufgebracht wird.

10. Verfahren nach einem der Ansprüche 1 bis 8, dadurch gekennzeichnet, daß die Beschichtung mit dem zwei- oder mehrphasigen agglomerierten Metallpulver oder mit dem Fülldraht durch ein thermisches Spritzverfahren aufgebracht wird.

11. Verfahren nach einem der Ansprüche 1 bis 7, dadurch gekennzeichnet, daß die Beschichtung durch ein Plasmapulver-Auftragsschweißverfahren aufgebracht wird.

12. Verfahren nach einem der Ansprüche 1 bis 11, dadurch gekennzeichnet, daß ein zwei- oder mehrphasiges ferritisch-austentitisches Gefüge mit einem Ferritgehalt zwischen 20 bis 80 Vol.-%, bevorzugt 20 bis 60 Vol.-%, insbesondere 30 bis 50 Vol.-%, als Beschichtung hergestellt wird.

13. Verfahren nach einem der Ansprüche 1 bis 12, gekennzeichnet durch den Einsatz eines agglomerierten Metallpulvers oder eines Fülldrahtes aus folgenden Komponenten in Gewichtsprozenten:
| | | |
|---|---|---|
| 14,0 | bis | 30,0 % Cr; |
| 3,0 | bis | 15,0 % Ni; |
| 0,01 | bis | 0,1 % C; |
| 0,05 | bis | 2,8 % N; |
| 1,0 | bis | 9,0 % Mo |
sowie Zusätzen von Mn, Co, Al, Ti, Cu, Nb, Ta, V, Zr, Si und W zusammen bis höchstens 12 Gew.-%, Rest Fe.

14. Verfahren nach einem der Ansprüche 1 bis 12, gekennzeichnet durch den Einsatz eines agglomerierten Metallpulvers oder eines Fülldrahtes aus folgenden Komponenten in Gewichtsprozenten:
| | | |
|---|---|---|
| 19,0 | bis | 28,0 % Cr; |
| 3,0 | bis | 15,0 % Ni; |
| 0,02 | bis | 0,06 % C; |
| 0,1 | bis | 2,0 % N; |
| 2,0 | bis | 8,0 % Mo |
sowie Zusätzen von Mn, Co, Al, Ti, Cu, Nb, Ta, V, Zr, Si und W zusammen bis höchstens 9,0 Gew.-%, Rest Fe.

## Claims

1. Process for producing a double-phase or multiple-phase coating of good corrosion resistance and high strength on a base material by thermal spraying or by hard surfacing of a mixture in the form of an agglomerated metal powder or a filler wire, wherein the mixture consists of the following components in weight per cent based on the total analysis:
| | | |
|---|---|---|
| 8.0 | to | 35.0 % Cr; |
| 0.5 | to | 20.0 % Ni; |
| 0.005 | to | 1.5 % C; |
| 0.05 | to | 3.0 % N; |
| 0.5 | to | 10.0 % Mo; |
| | | < 6.0 % Mn; |
| | | < 6.0 % Co; |
| | | < 6.0 % Al; |
| | | < 4.0 % Ti; |
| | | < 3.0 % Cu; |
| | | < 3.0 % Nb; |
| | | < 3.0 % Ta; |
| | | < 3.0 % V; |
| | | < 3.0 % Zr; |
| | | < 2.0 % Si; |
| | | < 1.0 % W; |
| | | remainder Fe, |
wherein nitrogen is added to the material mixture via a metallic compound of nitrogen.

2. Process according to claim 1, characterised in that the addition of nitrogen to the material mixture takes place by adding nitrides of elements Cr, Ti, Al, Si and Fe, or in that the addition of nitrogen to the material mixture is carried out by adding nitrides of elements Cr, Al, Mo, V, Ti, Ta, Nb, Si, Zr and Fe.

3. Process according to claim 1, characterised in that the addition of nitrogen to the material mixture is carried out by adding nitrogen-containing alloys of two or more elements, or in that the nitrogen is introduced via subproducts or alloys or alloying elements treated in nitrogen atmosphere.

4. Process according to claim 1, characterised in that the production of the coating is carried out by agglomerating two or more master alloys.

5. Process according to claim 1 or 4, characterised by an agglomerated metal powder made from a ferritic-austenitic powder and a nitride powder.

6. Process according to one of claims 1 to 5, characterised in that to produce the metal powder the two or more components are agglomerated by a spray-drying process using a resin binder, and/or in that the double-phase or multiple-phase alloy powder is supplied to the process without heat treatment or without sintering.

7. Process according to one of claims 1 to 6, characterised in that the double-phase or multiple-phase agglomerated alloy powder is heat-treated before application, wherein the double-phase or multiple-phase agglomerated alloy powder is optionally heat-treated under a nitrogen atmosphere before application.

8. Process according to one of claims 1 to 3, characterised in that the filler wire is alloyed with the alloying elements and the nitrogen compounds by means of a powder filling, wherein the filling of the filler wire is optionally produced from several nitrogen-free master alloys or from several master alloys with nitrogen.

9. Process according to claim. 8, characterised in that the filler wire for joint work is melted using an arc-welding process, or in that the filler wire is applied by means of an arc hard-surfacing process, wherein the filler wire is optionally applied in the form of electrodes by means of electrode manual welding.

10. Process according to one of claims 1 to 8, characterised in that the coating with the double-phase or multiple-phase agglomerated metal powder or with the filler wire is applied by a thermal spraying process.

11. Process according to one of claims 1 to 7, characterised in that the coating is applied by a plasma powder hard-surfacing process.

12. Process according to one of claims 1 to 11, characterised in that a double-phase or multiple-phase ferritic-austenitic structure having a ferrite content between 20 to 80 volume %, preferably 20 to 60 volume %, in particular 30 to 50 volume %, is produced as the coating.

13. Process according to one of claims 1 to 12, characterised by the use of an agglomerated metal powder or a filler wire of the following components in weight percentages:
| | | |
|---|---|---|
| 14.0 | to | 30.0 % Cr; |
| 3.0 | to | 15.0 % Ni; |
| 0.01 | to | 0.1 % C; |
| 0.05 | to | 2.8 % N; |
| 1.0 | to | 9.0 % Mo |
as well as additions of Mn, Co, Al, Ti, Cu, Nb, Ta, V, Zr, Si and W together up to 12 wt.% at the most, remainder Fe.

14. Process according to one of claims 1 to 12, characterised by the use of an agglomerated metal powder or a filler wire of the following components in weight percentages:
| | | |
|---|---|---|
| 19.0 | to | 28.0 % Cr; |
| 3.0 | to | 15.0 % Ni; |
| 0.02 | to | 0.06 % C; |
| 0.1 | to | 2.0 % N; |
| 2.0 | to | 8.0 % Mo |
as well as additions of Mn, Co, Al, Ti, Cu, Nb, Ta, V, Zr, Si and W together up to 9.0 wt % at the most, remainder Fe

## Revendications

1. Procédé de fabrication d'un revêtement bi-ou polyphasique ayant une bonne résistance à la corrosion et une solidité élevée sur un matériau de base par projection thermique ou par soudure avec apport d'un mélange sous forme d'une poudre métallique agglomérée ou d'un fil métallique d'apport, le mélange étant composé des composants suivants, en % en poids par rapport à l'analyse totale :
| | | |
|---|---|---|
| 8,0 | à | 35,0 % Cr; |
| 0,5 | à | 20,0 % Ni; |
| 0,005 | à | 1,5 % C; |
| 0,05 | à | 3,0 % N; |
| 0,5 | à | 10,0 % Mo; |
| | < | 6,0 % Mn; |
| | < | 6,0 % Co; |
| | < | 6,0 % Al; |
| | < | 4,0 % Ti; |
| | < | 3,0 % Cu; |
| | < | 3,0 % Nb; |
| | < | 3,0 % Ta; |
| | < | 3,0 % V; |
| | < | 3,0 % Zr; |
| | < | 2,0 % Si; |
| | < | 1,0 % W; |
| | le complément Fe, | |
le mélange de matériaux étant additionné d'azote par l'intermédiaire d'un composé métallique de l'azote.

2. Procédé selon la revendication 1, caractérisé en ce que l'addition de l'azote au mélange de matériau a lieu par ajout de nitrures des éléments Cr, Ti, Al, Si et Fe, ou que l'addition de l'azote au mélange de matériaux est effectuée par ajout de nitrures des éléments Cr, Al, Mo, V, Ti, Ta, Nb, Si, Zr et Fe.

3. Procédé selon la revendication 1, caractérisé en ce que l'addition d'azote au mélange de matériaux est effectuée par ajout d'alliages azotés composes de deux ou plusieurs éléments, ou que l'azote est introduit par l'intermédiaire de produits partiels d'est-à-dire alliages ou éléments d'alliage traités sous atmosphère d'azote.

4. Procédé selon la revendication 1, caractérisé en ce que la fabrication du revêtement est effectuée par agglomération de deux ou plusieurs pré-alliages.

5. Procédé selon la revendication 1 ou 4, caractérisé par une poudre métallique agglomérée composée d'une poudre ferritique-austénitique et d'une poudre de nitrure.

6. Procédé selon l'une des revendications 1 à 5, caractérisé en ce que pour la fabrication de la poudre métallique, les deux ou plusieurs composants sont agglomérées par un procédé de pulvérisation sous utilisation d'un liant résinique et/ou que la poudre d'alliage bi- ou polyphasique est introduite dans le procédé sans traitement thermique et/ou sans frittage.

7. Procédé selon l'une des revendications 1 à 6, caractérisé en ce que la poudre d'alliage bi- ou polyphasique est traité thermiquement avant l'application, la poudre d'alliage bi- ou polyphasique étant le cas échéant traité thermiquement sous une atmosphère d'azote.

8. Procédé selon l'une des revendications 1 à 3, caractérisé en ce que le fil d'apport est allié aux éléments d'alliage et aux composés azotés par un remplissage pulvérulent, le remplissage du fil d'apport étant fabriqué le cas échéant a partir de plusieurs pré-alliages sans azote ou de plusieurs pré-alliages comportant de l'azote.

9. Procédé selon la revendication 8, caractérisé en ce que le fil d'apport est fondu par un procédé de soudage à l'arc pour des travaux de jointure, ou que le fil d'apport est appliqué au moyen d'un procédé de soudage à l'arc avec apport, le fil d'apport étant appliqué le cas échéant sous forme d'électrodes par soudage manuel à électrodes.

10. Procédé selon l'une des revendications 1 à 8, caractérisé en ce que le revêtement par la poudre métallique agglomérée bi- ou polyphasique ou par le fil d'apport est appliqué par un procédé de projection thermique.

11. Procédé selon l'une des revendications 1 à 7, caractérisé en ce que le revêtement est appliquée par un procédé de soudage avec apport à partir de poudre au plasma.

12. Procédé selon l'une des revendications 1 à 11, caractérisé en ce qu'on fabriqu, en tant que revêtement une structure ferritique-austénitique bi- ou polyphasique avec une teneur en ferrite comprise entre 20 et 80 % en volume, de préférence entre 20 et 60 % en volume, en particulier entre 30 et 50 % en volume.

13. Procédé selon l'une des revendications 1 à 12, caractérisé par la mise en oeuvre d'une poudre métallique agglomérée ou d'un fil d'apport à partir des composants suivants en % en poids :
| | | |
|---|---|---|
| 14,0 | à | 30,0 % Cr; |
| 3,0 | à | 15,0 % Ni; |
| 0,01 | à | 0,1 % C; |
| 0,05 | à | 2,8 % N; |
| 1,0 | à | 9,0 % Mo; |
ainsi que des adjonctions de Mn, Co, Al, Ti, Cu, Nb, Ta, V, Zr, Si et W conjointement au plus 12 % en poids, le complément Fe.

14. Procédé selon l'une des revendications 1 à 12, caractérisé par la mise en oeuvre d'une poudre métallique agglomérée ou d'un fil d'apport à partir des composants suivants en % en poids :
| | | |
|---|---|---|
| 19,0 | à | 28,0 % Cr; |
| 3,0 | à | 15,0 % Ni; |
| 0,02 | à | 0,06 % C; |
| 0,1 | à | 2,0 % N; |
| 2,0 | à | 8,0 % Mo; |
ainsi que des adjonctions de Mn, Co, Al, Ti, Cu, Nb, Ta, V, Zr, Si et W conjointement au plus 9,0 % en poids, le complément Fe.
